# EUROPÄISCHE PATENTSCHRIFT

(11) **EP 2 565 063 B1**
(45) Veröffentlichungstag und Bekanntmachung des Hinweises auf die Patenterteilung: **09.12.2015**
(21) Anmeldenummer: 12182815.6
(22) Anmeldetag: 03.09.2012
(51) Int. Cl.: B60D 1/60, B60D 1/62

(54) **An einem Anhänger befestigbarer Steckerhalter sowie Anordnung eines Steckerhalters an einem Anhänger**
Plug holder which can be attached to a trailer and assembly of a plug holder on a trailer
Boîtier de connexion pouvant être fixé sur une remorque ainsi qu'agencement d'un boîtier de connexion sur une remorque

(30) Priorität: 05.09.2011 DE 102011053244
(43) Veröffentlichungstag der Anmeldung: 06.03.2013
(73) Patentinhaber: Gebr. Vitte GmbH & Co., 58339 Breckerfeld (DE)
(72) Erfinder: Winterhoff, Ulrich, 58339 Breckerfeld (DE)
(74) Vertreter: Kleine, Hubertus

(56) Entgegenhaltungen:
- DE-U- 1 727 460
- DE-U1- 7 735 220
- DE-U1- 7 929 811
- DE-U1-202010 003 623
- FR-A1- 2 469 301
- US-A- 6 076 691

## Beschreibung

Die Erfindung betrifft einen an einem Anhänger befestigbaren Steckerhalter nach dem Oberbegriff des Anspruchs 1.

Zur Halterung eines Steckers, über den in Verbindung mit einem Kraftfahrzeug ein Anhänger mit Strom versorgt wird, bei Nichtbenutzung des Anhängers, sind gattungsgemäße Steckerhalter bekannt, in die der Stecker eingesteckt und dort form- und/oder reibschlüssig gehalten wird, siehe beispielsweise DE 30 37 016 A1.

In Ausführungsvarianten der Anhänger kommen neuerlich unterschiedliche Stecker zum Einsatz, je nach Norm, üblicherweise mit sieben oder 13 Polen, wobei sich diese verschiedenpoligen Stecker auch in ihrem Außendurchmesser unterscheiden.

Um für beide Steckerarten einen sozusagen standardisierten Steckerhalter zur Verfügung zu stellen, ist in der EP 1 529 668 A1 vorgeschlagen, die Haltehülse mit einer Stufenöffnung zu versehen, deren jeweiliger lichter Durchmesser an den Außendurchmesser des einzusteckenden Steckers so angepasst ist, dass dieser insbesondere reibschlüssig darin gehalten ist.

Zur Befestigung dieses Steckerhalters am Anhänger ist eine Verbindungslasche vorgesehen, die einerseits den Steckerhalter trägt und andererseits mit einer Anhängerdeichsel verschraubt wird.

Dabei ist diese Befestigungseinrichtung an dem der Einstecköffnung für den Stecker gegenüberliegenden Seite der Haltehülse befestigt, was dazu führt, dass diese Seite einen geschlossenen Boden bildet.

Diese Art der Befestigungseinrichtung ist insofern nachteilig, als die abgewinkelte Lasche als separates Bauteil ausgebildet ist. Naturgemäß ist dies nur mit einem entsprechend hohen Fertigungsaufwand zu realisieren, mit den sich daraus ergebenden Kosten, zu denen sich des Weiteren Montagekosten addieren, da die Lasche durch geeignete Verbindungsmittel mit der Haltehülse verbunden werden muss.

Unabhängig davon ist auch der funktional bedingt geschlossene Boden als nachteilig anzusehen, da die nach oben hin offene Stufenöffnung bei nicht eingestecktem Stecker sehr leicht verschmutzen kann, bis hin zur Ansammlung von Regenwasser, das wiederum die Funktionsfähigkeit des anschließend eingesteckten Steckers durch Kontakt mit den Polen beeinträchtigen kann.

Der Erfindung liegt die Aufgabe zugrunde, einen Steckerhalter der gattungsgemäßen Art so weiterzuentwickeln, dass er konstruktiv einfacher aufgebaut, kostengünstiger herstellbar ist und in seiner Verwendungsfähigkeit verbessert wird.

Diese Aufgabe wird durch einen Steckerhalter mit den Merkmalen des Anspruchs 1 gelöst.

Gegenüber dem bekannten Steckerhalter bietet der neue eine Vielzahl von Vorteilen, sowohl hinsichtlich seiner Herstellung wie auch hinsichtlich seiner Verwendung.

Gemäß der Erfindung ist vorgesehen, dass die Befestigungseinrichtung mantelseitig an die Haltehülse angeformte Formschlusselemente aufweist, die demnach einstückig mit der Haltehülse ausgebildet sind. Zweckmäßigerweise bestehen sowohl die Haltehülse wie auch die Formschlusselemente aus Kunststoff, vorzugsweise einem in gewissem Umfang elastischen.

In Funktion, also nach einer Montage greifen die Formschlusselemente in Rastöffnungen der Anhängerkupplung, insbesondere in deren Handgriff ein und/oder in eine zentrale Rastöffnung des Handgriffs.

In jedem Fall sind die Rasthaken so weit elastisch verformbar, dass ein Aufschieben des Steckerhalters auf den Handgriff problemlos möglich ist, unter Aufbiegung bzw. Zusammendrücken der Rasthaken bis zum Einschnappen in die Rastöffnungen.

Neben der Einsparung von Herstellungskosten, die durch die einstückige Ausbildung der Befestigungseinrichtung und der Haltehülse möglich ist, ist gegenüber einem Mehrstoff-Steckerhalter eine verbesserte Wiederverwertbarkeit gegeben. Auch kann der Steckerhalter kundenspezifisch hergestellt werden, insbesondere hinsichtlich seiner Farbgestaltung, zumal der Steckerhalter mit einem einfachst aufgebauten Spritzwerkzeug herstellbar ist.

Die genannten, außenseitig am Handgriff angreifenden und die zentral angreifenden Formschlusselemente sind bevorzugt in unterschiedlichen radialen Ebenen angeordnet, so dass ein sehr sicherer, insbesondere kippsicherer Halt des Steckerhalters an der Anhängerkupplung gewährleistet ist.

Denkbar ist auch eine Ausbildung der Formschlusselemente derart, dass sie einen abgewinkelten Anschlussschenkel des Handgriffs, über den dieser an einem Kupplungsgehäuse der Anhängerkupplung angelenkt ist, im Sinne eines Riemens umgreifen. Dabei ist ein Ende dieses Riemens als Rasthaken ausgebildet, der in eine Rastöffnung des Steckerhalters eingreift. Der Formschluss zwischen dem Steckerhalter und dem Handgriff wird durch dessen üblicherweise eckigen Querschnitt möglich.

Die genormten Stecker, ob 7- oder 13-polig, sind jeweils mit Kulissenbahnen versehen, die in Funktion, also in Verbindung mit einer Steckdose im Sinne eines Bajonettverschlusses mit Haltezapfen oder dergleichen der Steckdose korrespondieren. Dabei sind die Kulissenbahnen in Einsteckrichtung offen.

Der neue Steckerhalter weist in der Wandung der Stufenöffnung, jedem der unterschiedlichen Durchmesserbereiche zugeordnete axial ausgerichtete Zentrierrippen auf, die beim Einstecken des jeweiligen Steckers in die Einführöffnungen der Kulissenbahnen eintauchen, wodurch eine Zentrierung des Steckers erreicht wird. Selbstverständlich sind Zentrierrippen auch bei einem nicht mit einer gestuften, sondern mit einer gleichmäßig durchgehenden Öffnung für lediglich einen Steckertyp versehenen Steckerhalter vorgesehen.

Zur sicheren Fixierung des Steckers verlaufen diese Zentrierrippen in Einführrichtung konisch, so dass der Stecker durch Reibschluss axial gesichert einliegt.

Nach einem weiteren Gedanken der Erfindung sind mantelseitig an der Haltehülse Halterippen angeformt, durch die eine formschlüssige Halterung einer Schutzhaube für eine Anhängerkugel möglich ist, die seitlich auf die Haltehülse aufsteckbar ist. Dabei korrespondieren die Halterippen mit Hinterschneidungen an der Innenwand der Schutzhaube.

Ferner sind an der Innenwandung der Haltehülse vier, in gleichem Winkelabstand zueinander angeordnete, axial sich erstreckende Freischnitte angebracht, an denen Kanten eines quader- oder würfelförmigen Klotzes anliegen, an den sich eine Sicherungskugel anschließt, die bei Nichtgebrauch des Anhängers als Diebstahlsicherung in einer Kugelpfanne der Anhängerkupplung einliegt.

Damit ist der neue Steckerhalter als Multifunktionsteil auch geeignet eine sichere Ablage für die Schutzhaube und die Diebstahlsicherung bei deren Nichtbenutzung zu bilden.

Zum leichteren Einführen der Stecker weist die Einführöffnung der Haltehülse eine Einführschräge auf, an der eine Dichtlippe des Steckers in eingesteckter Stellung anliegt, wobei die Einlaufschräge sowohl für den 13-poligen wie auch für den 7-poligen Stecker, bei der entsprechenden Abstufung, vorgesehen sein kann.

Durch die mantelseitige Anordnung der Formschlusselemente ist die Haltehülse durchgehend offen, so dass sich, wenn diese nicht benutzt wird, kein Schmutz bzw. Wasser darin ansammeln kann, wodurch naturgemäß eine Beeinträchtigung der Funktionsfähigkeit verhindert wird.

Weitere vorteilhafte Ausbildungen der Erfindung sind in den Unteransprüchen gekennzeichnet.

Ein Ausführungsbeispiel der Erfindung in verschiedenen Funktionsstellungen wird nachfolgend anhand der beigefügten Zeichnungen beschrieben.

Es zeigen:
- Figur 1: ein Ausführungsbeispiel einer Anordnung eines Steckerhalters an einer Anhängerkupplung in einer teilweise gebrochenen, perspektivischen Ansicht
- Figur 2: den Steckerhalter als Einzelheit in einer perspektivischen Ansicht
- Figur 3: die Anordnung nach Figur 1 in einer geschnittenen Seitenansicht in Gebrauchsstellung
- Figur 4: die Anordnung in einer weiteren Gebrauchsstellung, gleichfalls in perspektivischer Ansicht
- Figur 5: einen Schnitt durch die Anordnung gemäß der Linie V-V in Figur 4
- Figur 6: eine weitere Anwendung der erfindungsgemäßen Anordnung in einer Teil-Explosivdarstellung.

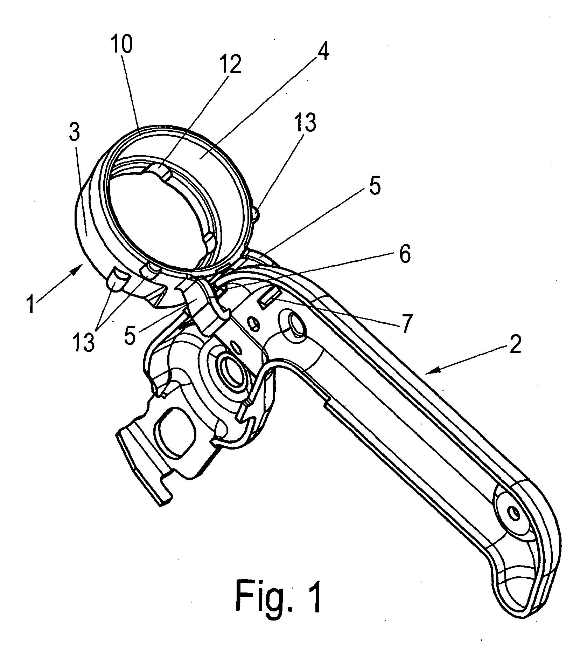

In der Figur 1 ist eine Anordnung eines Steckerhalters 1 an einer mit einem Handgriff 2 versehenen Anhängerkupplung dargestellt, wobei der Handgriff 2 im Längsschnitt gezeigt ist.

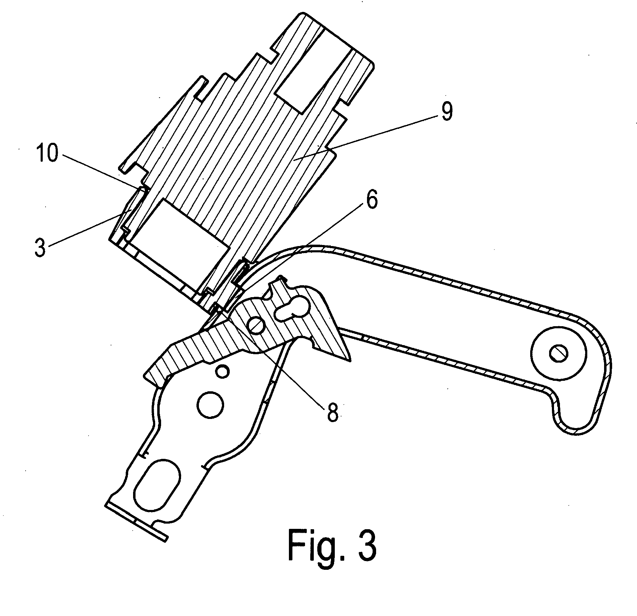

Der Steckerhalter 1 weist eine Haltehülse 3 mit einer Stufenöffnung 4 auf zur Aufnahme verschiedenpoliger Stecker 9, wobei in der Figur 3 als ein Beispiel ein 13-poliger Stecker 9 in die Haltehülse 3 eingesteckt ist, der sich einerseits an der Abstufung der Stufenöffnung 4 und andererseits an der oberen Stirnseite der Haltehülse 3 abstützt.

In diesem Bereich ist eine Einlaufschräge 10 vorgesehen, um ein leichteres Einstecken des Steckers 9 zu ermöglichen. Dabei dient eine typischerweise am Stecker 9 angeordnete, nicht dargestellte Dichtung, die an der Einlaufschräge 10 anliegt, der Abdichtung.

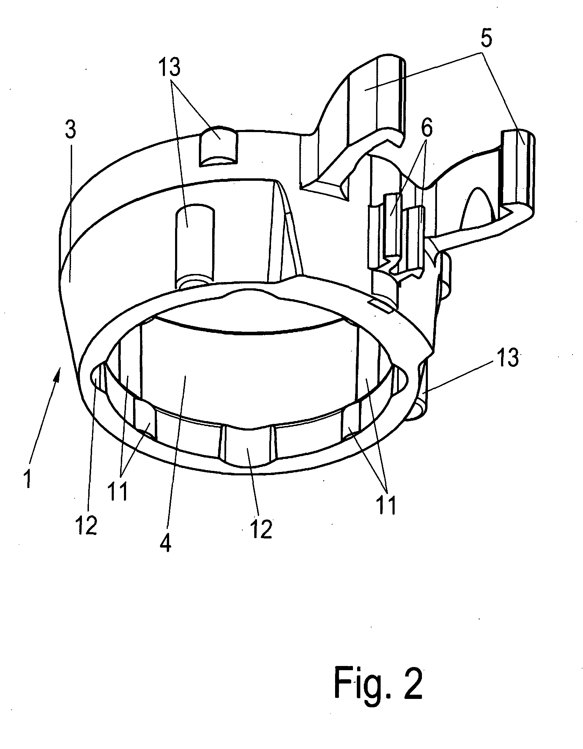

In der Figur 2 ist der Steckerhalter 1 als Einzelheit dargestellt. Erfindungsgemäß sind mantelseitig an der Haltehülse 3 Formschlusselemente in Form von Rasthaken 5, 6 angeformt zum formschlüssigen Eingriff in die Anhängerkupplung, in diesem Fall in den Handgriff 2.

Wie insbesondere die Figur 1 sehr deutlich zeigt, umgreifen die Rasthaken 5 die Stirnseite des Handgriffs 2 und greifen formschlüssig in Rastöffnungen 7 ein, von denen jeweils eine in den sich gegenüberliegenden Seiten des Handgriffs 2 vorgesehen sind.

Die Rasthaken 6 sind zentral angeordnet und greifen rastend in eine zentrale Rastöffnung 8 des Handgriffs 2 ein. In beiden Fällen werden die Rückstellkräfte wirksam, die dem Material des Steckerhalters 1 innewohnen, der bevorzugt aus einem geeigneten Kunststoff besteht. D.h., beim Befestigen des Steckerhalters 1 werden die Rasthaken 5 zunächst aufgespreizt, bis sie in den Eingriffsbereich der Rastöffnungen 7 gelangen, während die zentralen Rasthaken 6 beim Einführen in die zentrale Rastöffnung 8 zunächst zusammengedrückt werden und sich anschließend spreizen.

Zur Zentrierung des Steckers 9 sind in den beiden Flächenbereichen der Stufenöffnung 4 jeweils einer Steckergröße zugeordnet axial ausgerichtete Zentrierrippen 11 ausgeformt, in die Ausnehmungen des jeweiligen Steckers eingreifen, die Bestandteil von Ausbildungen zu einem Bajonettverschluss sind, mit dem der Stecker 9 in Funktion in einer Steckdose gehalten wird.

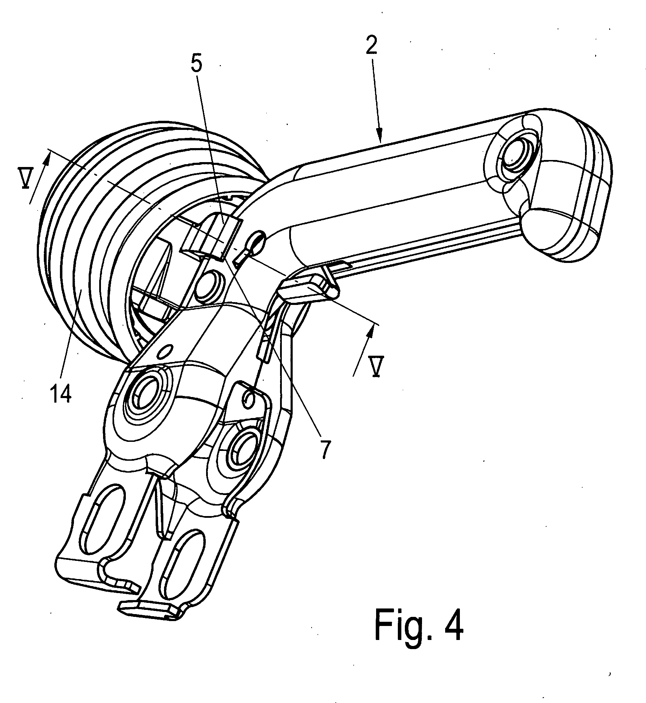

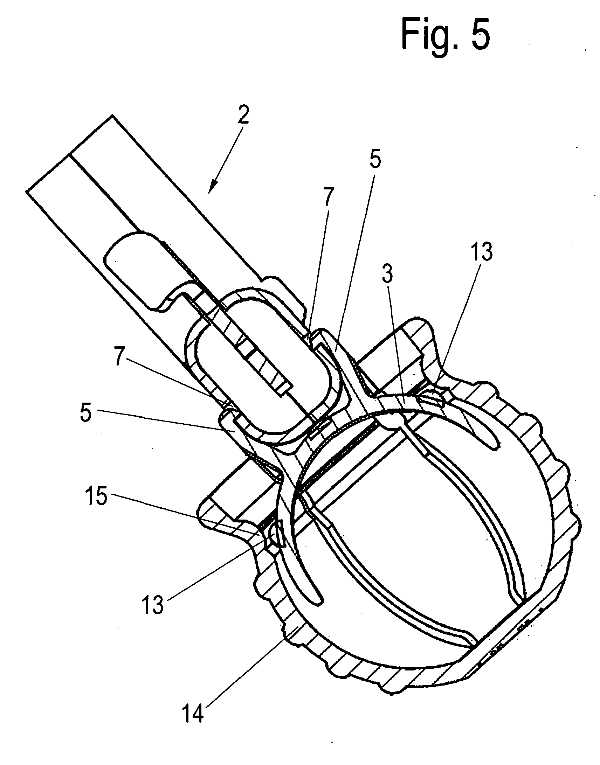

An der Mantelfläche der Haltehülse 3 sind Rastrippen 13 angeformt, die der formschlüssigen Halterung einer seitlich auf den Steckerhalter 1 aufgesteckten Schutzkappe dienen, wie sie in den Figuren 4 und 5 gezeigt ist.

Dabei hintergreifen die Rastrippen 13 eine umlaufende Hinterschneidung 15 der Schutzkappe 14, wie besonders deutlich in der Figur 5 erkennbar ist. Darin ist auch zu sehen, dass die Rastrippen 13 an sich gegenüberliegenden Stellen der Haltehülse 3 vorgesehen sind, so dass ein sicherer Halt der Schutzkappe 14 gewährleistet ist.

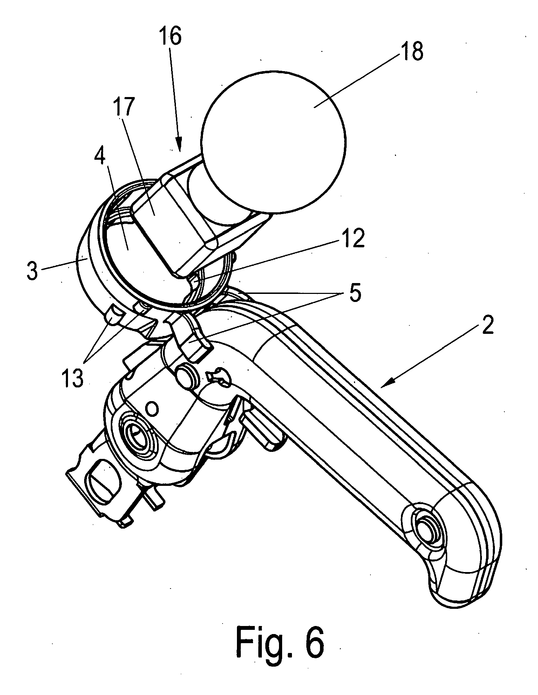

In der Figur 2 ist erkennbar, dass an dem einen kleineren Stecker aufnehmenden umfänglichen Bereich der Haltehülse 3 Freischnitte 12 vorgesehen sind, in die die Kanten eines würfelförmigen Klotzes 17 (Figur 6) einführbar sind, der Bestandteil eines Sicherungselementes 16 ist und an den sich eine Sicherungskugel 18 anschließt, die in Funktion als Diebstahlsicherung in ein Kupplungsmaul der Anhängerkupplung eingesteckt ist.

Die Positionierung des Klotzes 17 in der Haltehülse 3, die im Übrigen in axialer Richtung reibschlüssig erfolgt, dient der Aufnahme des Sicherungselementes 16 im Fall eines Nichtgebrauchs.

### Bezugszeichenliste

- 1: Steckerhalter
- 2: Handgriff
- 3: Haltehülse
- 4: Stufenbohrung
- 5: Rasthaken
- 6: Rasthaken
- 7: Rastöffnung
- 8: zentrale Rastöffnung
- 9: Stecker
- 10: Einlaufschräge
- 11: Zentrierrippe
- 12: Freischnitt
- 13: Rastrippe
- 14: Schutzkappe
- 15: Hinterschneidung
- 16: Sicherungselement
- 17: Klotz
- 18: Sicherungskugel

## Patentansprüche

1. An einem Anhänger befestigbarer Steckerhalter (1), mit einer eine Öffnung zur Aufnahme eines Steckers (9) aufweisenden die aus einem Kunststoff bestehenden, beidseitig offenen Haltehülse (3) sowie einer Befestigungseinrichtung zum Anschluss an die Anhängerkupplung, **dadurch gekennzeichnet, dass** die Befestigungseinrichtung mantelseitig an Haltehülse (3) angeformte Formschlusselemente aufweist, zur Befestigung an einer Anhängerkupplung.

2. Steckerhalter nach Anspruch 1, **dadurch gekennzeichnet, dass** die Formschlusselemente als elastisch verformbare Rasthaken (5, 6) ausgebildet sind.

3. Steckerhalter nach Anspruch 1 oder 2, **dadurch gekennzeichnet, dass** die Öffnung einsteckseitig eine Einlaufschräge (10) aufweist.

4. Steckerhalter nach einem der vorhergehende Ansprüche, **dadurch gekennzeichnet, dass** die Öffnung als Stufenöffnung (4) zur Aufnahme verschiedenpoliger Stecker (9) ausgebildet ist.

5. Steckerhalter nach einem der vorhergehende Ansprüche, **dadurch gekennzeichnet, dass** die Öffnung im Wandungsbereich mit axial ausgerichteten Zentrierrippen (11) versehen ist.

6. Steckerhalter nach einem der vorhergehende Ansprüche, **dadurch gekennzeichnet, dass** die Haltehülse (3) im Wandungsbereich axial sich erstreckende Freischnitte (12) aufweist.

7. Steckerhalter nach einem der vorhergehende Ansprüche, **dadurch gekennzeichnet, dass** am Mantel der Haltehülse (3) an sich gegenüberliegenden Seiten Rastrippen (13) angeformt sind zur formschlüssigen Halterung einer Schutzkappe (14).

8. Steckerhalter nach einem der vorhergehende Ansprüche, **dadurch gekennzeichnet, dass** die Zentrierrippen (11) in Einschubrichtung zum reibschlüssigen axialen Halten des Steckers (9) konisch verlaufen.

## Claims

1. A plug holder (1) which can be attached to a trailer, comprising a holding sleeve (3) which is provided with an opening for retaining a plug (9), consists of a plastic material and is open on both sides, and a fixing device for connecting to a trailer coupling, **characterized in that** the fixing device comprises interlocking elements which are integrally formed on the jacket side on the holding sleeve (3), for fixing to a trailer coupling.

2. A plug holder according to claim 1, **characterized in that** the interlocking elements are formed as elastically deformable latching hooks (5, 6).

3. A plug holder according to claim 1 or 2, **characterized in that** the opening comprises an insertion bevel (10) on the insertion side.

4. A plug holder according to one of the preceding claims, **characterized in that** the opening is formed as a stepped opening (4) for accommodating plugs (9) of different polarity.

5. A plug holder according to one of the preceding claims, **characterized in that** the opening in the wall region is provided with axially oriented centring ribs (11).

6. A plug holder according to one of the preceding claims, **characterized in that** the holding sleeve (3) comprises axially extending clearances (12) in the wall region.

7. A plug holder according to one of the preceding claims, **characterized in that** the latching ribs (13) are integrally formed on opposite sides on the jacket of the holding sleeve (3) for the interlocking retaining of a protective cap (14).

8. A plug holder according to one of the preceding claims, **characterized in that** the centring ribs (11) extend conically in the insertion direction for the frictionally engaged, axial retaining of the plug (9).

## Revendications

1. Boîtier de connexion (1) pouvant être fixé sur une remorque, avec un manchon de maintien (3) composé d'une matière plastique, ouvert des deux côtés et présentant une ouverture destinée à recevoir un connecteur (9) et avec un dispositif de fixation pour le raccordement à l'attelage de remorque, **caractérisé en ce que** le dispositif de fixation présente sur son enveloppe des éléments d'engagement positif formés sur le manchon de maintien (3) pour la fixation à un attelage de remorque.

2. Boîtier de connexion selon la revendication 1, **caractérisé en ce que** les éléments d'engagement positif sont conformés comme des crochets d'encliquetage (5,6) déformables de façon élastique.

3. Boîtier de connexion selon la revendication 1 ou 2, **caractérisé en ce que** l'ouverture présente un biseau d'entrée (10) sur un côté.

4. Boîtier de connexion selon l'une des revendications précédentes, **caractérisé en ce que** l'ouverture est conformée comme une ouverture en gradins (4) destinée à recevoir des connecteurs (9) ayant un nombre des pôles différents.

5. Boîtier de connexion selon l'une des revendications précédentes, **caractérisé en ce que** l'ouverture est munie dans sa zone de paroi de nervures de centrage (11) orientées dans le sens axial.

6. Boîtier de connexion selon l'une des revendications précédentes, **caractérisé en ce que** le manchon de maintien (3) présente dans sa zone de paroi des découpes (12) orientées dans le sens axial.

7. Boîtier de connexion selon l'une des revendications précédentes, **caractérisé en ce que** sont formées sur l'enveloppe du manchon de maintien (3), sur des côtés se faisant face, des nervures d'engagement (13) pour la rétention par engagement positif d'un capuchon de protection (14).

8. Boîtier de connexion selon l'une des revendications précédentes, **caractérisé en ce que** les nervures de centrage (11) ont une forme conique dans le sens d'insertion en vue de la rétention axiale du connecteur (9) par friction.
